(19) Europäisches Patentamt / European Patent Office / Office européen des brevets

(11) **EP 2 501 014 B1**

(12) **EUROPEAN PATENT SPECIFICATION**

(45) Date of publication and mention
of the grant of the patent:
**11.05.2016 Bulletin 2016/19**

(51) Int Cl.:
***H02J 3/38*** (2006.01)

(21) Application number: **11158034.6**

(22) Date of filing: **14.03.2011**

(54) **Method and apparatus for detecting islanding conditions of distributed generator**

Verfahren und Vorrichtung zur Erkennung der Inselbildungsbedingungen eines verteilten Generators

Procédé et appareil pour détecter les conditions d'îlotage d'un générateur distribué

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.09.2012 Bulletin 2012/38**

(73) Proprietor: **ABB Research Ltd.**
**8050 Zürich (CH)**

(72) Inventors:
• **Timbus, Adrian**
**5405 Daettwil (CH)**
• **Oudalov, Alexandre**
**5442 Fislisbach (CH)**
• **Escobar, Gerardo**
**8050 Zürich (CH)**
• **Serpa, Leonardo-Augusto**
**8008 Zürich (CH)**

(74) Representative: **Kolster Oy Ab**
**Iso Roobertinkatu 23**
**PO Box 148**
**00121 Helsinki (FI)**

(56) References cited:
**EP-A1- 1 764 894**     **US-A1- 2006 004 531**
**US-B1- 6 429 546**     **US-B1- 7 408 268**

• PENG LI ET AL: "A novel active islanding detection method based on current-disturbing", ELECTRICAL MACHINES AND SYSTEMS, 2009. ICEMS 2009. INTERNATIONAL CONFERENCE ON, IEEE, PISCATAWAY, NJ, USA, 15 November 2009 (2009-11-15), pages 1-5, XP031611973, ISBN: 978-1-4244-5177-7
• CIOBOTARU M ET AL: "Online grid impedance estimation for single-phase grid-connected systems using PQ variations", POWER ELECTRONICS SPECIALISTS CONFERENCE, 2007. PESC 2007. IEEE, IEEE, PISCATAWAY, NJ, USA, 17 June 2007 (2007-06-17), pages 2306-2312, XP031218627, ISBN: 978-1-4244-0654-8
• BALAGUER I J ET AL: "Survey of photovoltaic power systems islanding detection methods", INDUSTRIAL ELECTRONICS, 2008. IECON 2008. 34TH ANNUAL CONFERENCE OF IEEE, IEEE, PISCATAWAY, NJ, USA, 10 November 2008 (2008-11-10), pages 2247-2252, XP031825764, ISBN: 978-1-4244-1767-4

**Description**

FIELD OF THE INVENTION

The invention relates to distributed power generation and particularly to detecting islanding conditions for distributed generators.

BACKGROUND INFORMATION

Lately, distributed generation (DG) based on renewable energy resources has shown a significant growth facilitated by policy makers, global concerns about climate change, availability of affordable energy shortage technologies, interest in clean energy production, etc. Energy suppliers using power plants based on fossil fuel (coal, natural gas, etc.) are also investing in an extension of energy generation portfolio by renewable alternatives such as wind turbines and photovoltaic systems.

However, for connecting such systems to the utility grid, several requirements are to be met. In case of photovoltaic systems (PV), these requirements are typically published by standardizing institutions, such as IEC and IEEE, but also by local regulating authorities. One of the requirements, mandatory in many parts of the world, is that photovoltaic systems should be able to detect islanding conditions.

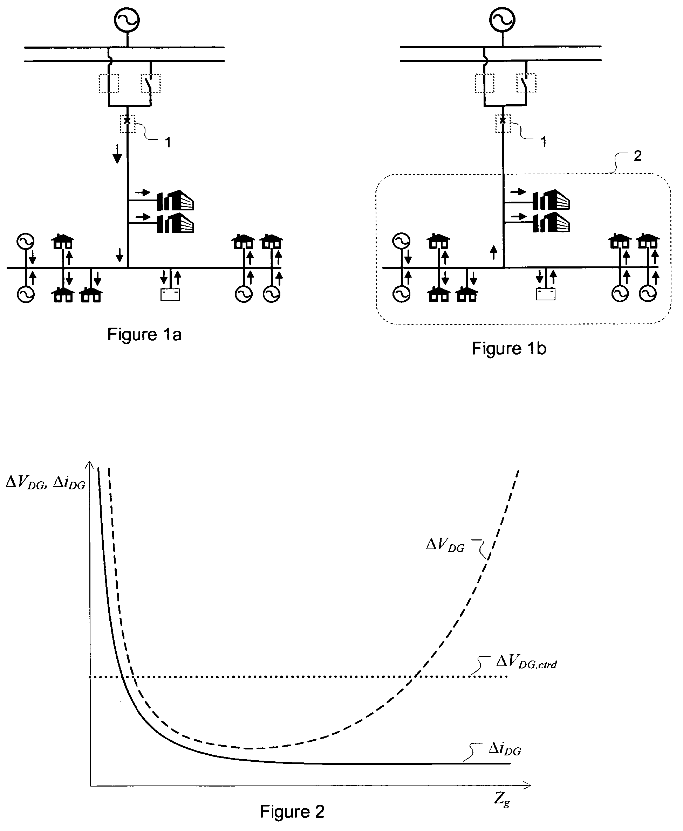

Islanding refers to a condition of a distributed generator continuing to power a part of a distribution network even though power from an electric utility is no longer present. Figures 1a and 1b show a difference between a grid-connected mode and an islanding mode. In Figure 1a, a switching device 1, e.g. circuit breaker or fuse, is closed, and distributed generators operate in grid-connected mode. In Figure 1b, the switching device 1 is opened and the lower part 2 of the network is no longer connected to the main grid. However, if the power generated by distributed generators closely matches the power required by the load, the network can continue operation in islanding mode.

Islanding can be dangerous to utility workers, who may not realize that the particular part of the network is still powered even though there is no power from the main grid. Also, islanding can lead to damages to customer equipment, especially in situations of re-closing into an island. For that reason, distributed generators may have to be able to detect islanding and immediately stop power production.

Historically many methods for detecting islanding conditions have been developed. These methods can be categorized in three main groups: passive, active, and communication-based methods.

Passive methods monitor one or more grid variables and, based on deviation of the variables from allowed thresholds, a decision of disconnecting (detection of islanding) can be made.

Active methods deliberately disturb the grid and, on the basis of the grid response to that disturbance (variation of grid electrical quantities), decide whether or not islanding occurred.

Communication-based methods make use of a communication means with an external unit (owned, for instance, by the distribution system operator) which signalizes the opening of the switching equipment to all distributed generators in that part of the network.

Each of the above methods has its own strengths and weaknesses. Active methods are the most frequently encountered in today's market. An advantage of the active methods is a very small non-detection zone and ease of implementation in a microprocessor. However, active methods may have a disadvantage due to the disturbances they introduce into the grid, disturbances which very often are associated with power quality. In some cases, large current variations produced for observing the islanding detection may have a negative influence on the power quality.

The variations may be empirically selected in order to ensure that the distributed generator does not miss islanding conditions. The variation may be chosen to be higher than necessary just to provide a safety margin. The maximum variation may be limited by the regulating authorities.

While current variations produced by distributed generators are fixed for a certain manufacturer, a grid response to these variations is dependent on the grid impedance seen by the distributed generator. Consequently, the grid response is different for different impedances (or different locations). Therefore, the disturbances created by the active methods may not be optimal for all locations and operating conditions.

European patent application EP 1764894 A1 relates to the field of power electronics, and more particularly to a method for detecting the islanding operation of a distributed generator connected to a utility grid and to a device for detecting islanding operation of a distributed power generator.

Publication "A Novel Active Islanding Detection Method Based on Current-Disturbing", Peng Li et al., Electrical Machines and Systems, 2009, relates to an active islanding detection method for a distributed resource (DO) unit which is coupled to a utility grid through grid-connected converter.

US Patent US 7408268 B1 relates to the field of distributed power generation systems, and more particularly to an active method for detecting an islanding condition of a distributed power generator connected to a power grid.

SUMMARY

An object of the present invention is to provide a method and an apparatus for implementing the method so as to overcome the above problems. The objects of the invention are achieved by a method and an apparatus which are characterized by what is stated in the independent claims. The preferred embodiments of the invention are disclosed in the dependent claims.

The invention is based on the idea of adaptive self adjustment of the variations induced to the grid for different values of grid impedances. The variations may be adjusted on the basis of an estimated grid impedance. A threshold value to which a grid response is compared may also be adjusted.

The disclosed adaptive adjustment for different values of grid impedance can help diminish an impact on power quality caused by potentially large power variations. An impact on other distributed generators connected to the same feeder may also diminish, thus minimizing the risk of exceeding their nuisance trip limits (a limit at which a small disturbance in the network, such as connection/disconnection of a load, causes a fault event on the distributed generator) due to potentially large grid voltage variations.

BRIEF DESCRIPTION OF THE DRAWINGS

In the following the invention will be described in greater detail by means of preferred embodiments with reference to the attached drawings, in which

Figures 1 a and 1 b illustrate a main difference between a grid connected mode and an islanding mode of a distributed network;
Figure 2 illustrates a relation between voltage, impedance and current;
Figure 3 illustrates an embodiment, where a distributed generator is connected to a utility grid; and
Figure 4 illustrates an embodiment, where a value of grid impedance is used to calculate the right variation necessary to be injected to a grid connection point in order to detect islanding.

DETAILED DESCRIPTION

As an example, a grid response in terms of voltage variations is detailed below. Figure 2 illustrates a relation between voltage variation $\Delta V_{DG}$, grid impedance $Z_g$ and an output current variation $\Delta i_{DG}$. The output current variation $\Delta i_{DG}$ of a distributed generator is represented by a solid line. The voltage variation $\Delta V_{DG}$ at the output of the distributed generator is represented by a dashed line.

Because of a direct relation between these quantities, two situations can be found where the voltage variation gets a large magnitude. If the current variation $\Delta i_{DG}$ is large, the voltage variation $\Delta V_{DG}$ is large. Similarly, if grid impedance $Z_g$ is large, the voltage variation $\Delta V_{DG}$ is large.

If grid impedance $Z_g$ is known, one can control the current variation $\Delta i_{DG}$ in such a way that a voltage drop over that impedance $Z_g$ is constant and controllable over time. A controlled voltage variation $\Delta V_{DG,ctd}$ is represented a dotted line in Figure 2. The voltage variation can be controlled to be as large as necessary above the threshold but not too large.

Therefore, a following method for detecting islanding conditions may be used. First, grid impedance is estimated. To achieve this, monitoring of grid parameters such as voltage, frequency or current may be necessary. A variation may then be induced on a first electrical quantity of the grid. In order to minimize an impact of the induced variance on the grid, a magnitude of the induced variation may be optimized on the grid on the basis of the estimated grid impedance. The first electrical quantity may, for instance, be the output current of the distributed generator. The variation may, for instance, be induced by determining a variation reference on the basis of the estimated impedance, and by controlling the distributed generator, on the basis of the variation reference, to induce the variation on the first electrical quantity.

As the variations of the first electrical quantity cause variations to a second electrical quantity of the grid, a grid response, in a form of the variations of the second electrical quantity, may then be monitored. The islanding conditions may be determined on the basis of the monitored response. The second electrical quantity may, for instance, be a voltage, frequency or phase of the grid at a connection point of the distributed generator. The variation of a second electrical quantity is determined to estimate the grid impedance.

Then, the variation of the second electrical quantity may be compared with a set threshold. The islanding conditions may then be determined on the basis of the comparison. The threshold does not have to be fixed. A level for the threshold may, for instance, be determined on the basis of a steady state grid response in grid-connected mode.

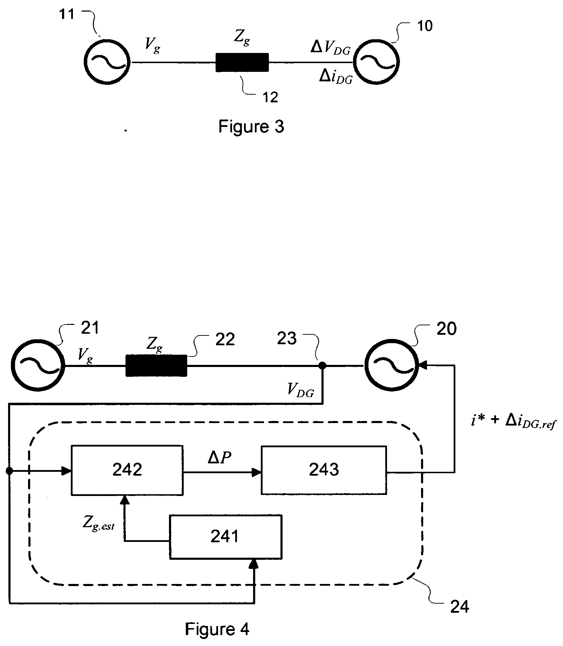

Figure 3 illustrates an embodiment, where a distributed generator 10 is connected to a utility grid 11. Between the generator 10 and the grid 11 is an impedance 12. The generator controls a current $i_{DG}$ at a grid connection point. An active component and a reactive component of the current $i_{DG}$ may be represented as follows:

$$ip_{DG}(t) = ip_{DG}(t-1) + \Delta ip_{DG}(t) \tag{1}$$

$$iq_{DG}(t) = iq_{DG}(t-1) + \Delta iq_{DG}(t) \tag{2}$$

where $ip_{DG}(t)$ is the active current delivered by generator at a time instant $t$, $ipDG(t-1)$ is the active current delivered by the generator at the time instant $t-1$ and $\Delta ip_{DG}(t)$ is the current variations between time instant $t-1$ and $t$. Similar notations apply also to a reactive current $iq_{DC}$.

Variations in active and reactive currents lead to voltage $\Delta V_{DG}$ and/or frequency $\Delta f_{DG}$ variations at the grid connection point, depending on the type of impedance the grid has. In case the utility grid is present (grid-connected mode), the variations may be very small due to voltage and/or frequency controls on the side of the utility grid. However, in a situation that the grid source is disconnected (islanding mode), these variations will increase and, on the basis of the level of increase, islanding occurrence can be assessed.

The method of the disclosure may be used in the embodiment of Figure 3. An estimate of the grid impedance may be calculated, for instance, by monitoring the changes $\Delta i_{DG}$ of the generated current vector and changes $\Delta V_{DG}$ of grid voltage vector:

$$V_{DG}(t-1) = V_g(t-1) - Z_g i_{DG}(t-1) \tag{3}$$

$$V_{DG}(t) = V_g(t) - Z_g i_{DG}(t) \tag{4}$$

Assuming that the grid voltage $V_g$ does not change significantly, an estimate $Z_{g,est}$ of the grid impedance may be calculated as follows:

$$Z_{g,est} = \frac{\Delta V_{DG}}{\Delta i_{DG}} \tag{5}$$

The current variation $\Delta i_{DG}$ created by the DG leads to voltage variation $\Delta V_{DG}$ at the distributed generator terminals. $\Delta V_{DG}$ is then compared with a threshold value $V_{trsh}$ and if its value is larger than the threshold, islanding conditions are considered. Since the variations of voltage at DG terminals need to be larger than the threshold voltage, i.e. $\Delta V_{DG} > V_{trsh}$, knowing the value of $Zg,_{est}$, the current variations can be derived with regard to $V_{trsh}$ as:

$$\Delta i_{DG} > \frac{V_{trsh}}{Z_g} \tag{6}$$

Figure 4 illustrates another embodiment, where a value of grid impedance is used to calculate the right variation necessary to be injected to a grid connection point in order to detect islanding. A distributed generator 20 is connected to a utility grid 21. Between the generator 20 and the grid 21 is an impedance 22. The generator 20 controls a current $i_{DG}$ at a grid connection point 23. The embodiment comprises an apparatus 24 for detecting islanding conditions of the distributed generator 20. An apparatus 24 controls the generator 20. The apparatus 24 comprises an impedance calculation block 241, and an islanding detection block 242 and a generator controller 243. The generator controller may, as in the embodiment of Figure 4, give an output current reference $i^*$ to the generator 20. The generator 20 then produces the output current on the basis of the reference.

On the basis of a voltage measurement at a point of connection 23 with the utility grid, an estimate $Z_{g,est}$ of a grid impedance is first calculated in the impedance calculation block 241. The calculation may be done, for instance, using the algorithm described by equations 3 to 5.

The estimated impedance $Z_{g,esl}$ is then passed to an islanding detection block 242 which adapts an output power variation in such a way that the variations created in the grid are sufficiently high to determine islanding conditions. The islanding detection block 242 may, for instance, calculate a value for a variation reference parameter $\Delta P$ on the basis of the estimated impedance $Z_{g,est}$. The generator controller 243 may then control the output of the distributed generator 20, on the basis of the variation reference $\Delta P$, to induce variations in the grid. The controller 243 may, for instance, modify the current reference $i^*$ to contain a variation $\Delta i_{DG,ref}$, which, in turn, induces variation $\Delta i_{DG}$ in the output current.

On the basis of the grid response to the variations, the islanding condition may be assessed. The islanding detection block 242 determines the islanding conditions, for instance by monitoring the voltage variations. The amount of increase in the induced variations is compared to a threshold and if it exceeds the threshold value, islanding is assumed. The grid response may also be monitored in other quantities, for instance frequency or phase quantities.

If islanding condition is assumed, a decision of disconnecting the distributed generator 20 from the grid may be made. The level of the threshold may also be determined on the basis of the estimated grid impedance, for instance as in equation 6.

Impedances between grid and distributed generator may be different for different arrangements. However, impedance between a grid and a distributed generator in one arrangement typically stays constant. By observing a steady state grid response in grid-connected mode, the threshold can be lowered closer to the nuisance trip limit, thus permitting to lower the grid variations even more. Another aspect of lowering the threshold is that by lowering the threshold value as close as possible to the limit where nuisance trip in grid-connected mode may happen, a higher sensitivity of the method in the islanded mode may be achieved.

It will be obvious to a person skilled in the art that, as the technology advances, the inventive concept can be implemented in various ways. The invention and its embodiments are not limited to the examples described above but may vary within the scope of the claims.

**Claims**

1. A method for detecting islanding conditions for a distributed generator (20) connected to a grid (21), wherein the method comprises steps of:

   estimating a grid impedance (22),
   inducing a variation on a value of a first electrical quantity of the grid (21),
   monitoring a grid response to the variation, and
   determining islanding conditions on the basis of the monitored response, **characterized in that**
   a magnitude of the induced variation is optimized on the basis of the estimated grid impedance (22) in order to minimize an impact of the induced variation on the grid (21).

2. A method according to claim 1, wherein inducing a variation on the grid comprises
   determining a variation reference on the basis of the estimated impedance (22),
   controlling the distributed generator (20), on the basis of the variations reference, to induce a variation on the first electrical quantity.

3. A method according to claim 1 or 2, wherein monitoring the grid response comprises
   determining a variation in a second electrical quantity of the grid (21), such as voltage, frequency or phase, induced by the variations of the first electrical quantity,
   comparing the variation in the second electrical quantity with a set threshold, and
   making a decision of disconnecting the generator (20) on the basis of the comparison.

4. A method according to claim 3, wherein comparing the determined quantity with the set threshold comprises determining a level for the threshold on the basis of a steady grid response in grid connected mode.

5. An apparatus (24) for detecting islanding conditions of a distributed generator (20) connected to a grid (21), wherein the apparatus (24) comprises:

   means for estimating a grid impedance (22),
   means for inducing a variation on a value of a first electrical quantity of the grid,
   means for monitoring a grid response to the variation, and
   means for determining islanding conditions on the basis of the monitored response, **characterized in that**
   a magnitude of the induced variation is optimized on the basis of the estimated grid impedance (22) in order to minimize an impact of the induced variation on the grid (21).

**Patentansprüche**

1.  Verfahren zur Erkennung von Inselbildungsbedingungen für einen verteilten Generator (20), der mit einem Netz (21) verbunden ist, wobei das Verfahren Schritte umfasst, in denen:

    eine Netzimpedanz (22) geschätzt wird,
    eine Variation in einem Wert einer ersten elektrischen Größe des Netzes (21) induziert wird,
    eine Netzreaktion auf die Variation überwacht wird und
    Inselbildungsbedingungen aufgrund der überwachten Reaktion bestimmt werden, **dadurch gekennzeichnet, dass**
    eine Größe der induzierten Variation aufgrund der geschätzten Netzimpedanz (22) optimiert wird, um eine Wirkung der induzierten Variation auf das Netz (21) zu minimieren.

2.  Verfahren nach Patentanspruch 1, wobei das Induzieren einer Variation auf dem Netz umfasst:

    Bestimmung einer Variationsreferenz aufgrund der geschätzten Impedanz (22),
    Steuerung des verteilten Generators (20) aufgrund der Variationsreferenz zum Induzieren einer Variation in der ersten elektrischen Größe.

3.  Verfahren nach Patentanspruch 1 oder 2, wobei das Überwachen der Netzreaktion umfasst:

    Bestimmung einer Variation in einer zweiten elektrischen Größe des Netzes (21) wie Spannung, Frequenz oder Phase, die durch die Variationen der ersten elektrischen Größe induziert wird,
    Vergleichen der Variation in der zweiten elektrischen Größe mit einem festgesetzten Schwellenwert und
    Treffen einer Entscheidung, den Generator (20) aufgrund des Vergleichs abzuschalten.

4.  Verfahren nach Patentanspruch 3, wobei das Vergleichen der bestimmten Größe mit dem festgesetzten Schwellenwert umfasst:

    Bestimmung eines Niveaus für den Schwellenwert aufgrund einer stationären Netzreaktion im netzgekoppelten Modus.

5.  Vorrichtung (24) zur Erkennung von Inselbildungsbedingungen eines verteilten Generators (20), der mit einem Netz (21) verbunden ist, wobei die Vorrichtung (24) umfasst:

    Mittel zur Schätzung einer Netzimpedanz (22),
    Mittel zum Induzieren einer Variation in einem Wert einer ersten elektrischen Größe des Netzes,
    Mittel zum Überwachen einer Netzreaktion auf die Variation und
    Mittel zur Bestimmung von Inselbildungsbedingungen aufgrund der überwachten Reaktion, **dadurch gekennzeichnet, dass**
    eine Größe der induzierten Variation aufgrund der geschätzten Netzimpedanz (22) optimiert wird, um eine Wirkung der induzierten Variation auf das Netz (21) zu minimieren.

**Revendications**

1.  Procédé pour détecter des conditions d'îlotage pour une génératrice répartie (20) connectée à un réseau électrique (21), dans lequel le procédé comprend les étapes consistant à :

    estimer une impédance de réseau électrique (22),
    induire une variation d'une valeur d'une première quantité électrique du réseau électrique (21),
    surveiller une réponse du réseau électrique à la variation, et
    déterminer des conditions d'îlotage sur la base de la réponse surveillée, **caractérisé en ce que**
    une amplitude de la variation induite est optimisée sur la base de l'impédance de réseau électrique (22) estimée afin de réduire à un minimum un impact de la variation induite sur le réseau électrique (21).

2.  Procédé selon la revendication 1, dans lequel l'étape consistant à induire une variation sur le réseau électrique comprend :

la détermination d'une référence de variation sur la base de l'impédance (22) estimée,
la commande de la génératrice répartie (20), sur la base de la référence de variation, pour induire une variation sur la première quantité électrique.

3. Procédé selon la revendication 1 ou 2, dans lequel l'étape consistant à surveiller la réponse du réseau électrique comprend :

la détermination d'une variation d'une deuxième quantité électrique du réseau électrique (21), telle qu'une tension, une fréquence ou une phase, induite par les variations de la première quantité électrique,
la comparaison de la variation de la deuxième quantité électrique avec un seuil fixé, et
la prise d'une décision de déconnexion de la génératrice (20) sur la base de la comparaison.

4. Procédé selon la revendication 3, dans lequel la comparaison de la quantité déterminée avec le seuil fixé comprend :

la détermination d'un niveau pour le seuil sur la base d'une réponse du réseau électrique en régime permanent dans un mode connecté du réseau électrique.

5. Appareil (24) pour détecter des conditions d'îlotage d'une génératrice répartie (20) connectée à un réseau électrique (21), dans lequel l'appareil (24) comprend :

des moyens pour estimer une impédance de réseau électrique (22),
des moyens pour induire une variation sur une valeur d'une première quantité électrique du réseau électrique,
des moyens pour surveiller une réponse du réseau électrique à la variation, et
des moyens pour déterminer des conditions d'îlotage sur la base de la réponse surveillée, **caractérisé en ce que** une amplitude de la variation induite est optimisée sur la base de l'impédance de réseau électrique (22) estimée afin de réduire à un minimum un impact de la variation induite sur le réseau électrique (21).

Figure 1a

Figure 1b

Figure 2

11 ⌇

$V_g$    $Z_g$    $\Delta V_{DG}$    ⌐ 10

$\Delta i_{DG}$

⌐ 12

Figure 3

⌐ 21    $Z_g$    ⌐ 22    23 ⌐    ⌐ 20

$V_g$

$V_{DG}$

$i^* + \Delta i_{DG.ref}$

242    $\Delta P$    243

$Z_{g.est}$    241

⌐ 24

Figure 4

**EP 2 501 014 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1764894 A1

- US 7408268 B1

**Non-patent literature cited in the description**

- **PENG LI et al.** A Novel Active Islanding Detection Method Based on Current-Disturbing. *Electrical Machines and Systems,* 2009